# EUROPÄISCHE PATENTSCHRIFT

(11) **EP 1 867 796 B1**
(45) Veröffentlichungstag und Bekanntmachung des Hinweises auf die Patenterteilung: **27.07.2011**
(21) Anmeldenummer: 07009771.2
(22) Anmeldetag: 16.05.2007
(51) Int. Cl.: E04B 1/80, B32B 21/10

(54) **Verbundplatte für den Innenausbau**
Composite boards for interior work
Panneaux composites pour les travaux de finition intérieure

(30) Priorität: 16.05.2006 DE 102006023087
(43) Veröffentlichungstag der Anmeldung: 19.12.2007
(73) Patentinhaber: GLUNZ AG, 49716 Meppen (DE)
(72) Erfinder: Holzer, Robert, 56077 Koblenz (DE); Pfemeter, Alfred, Dr., 49716 Meppen (DE); Kalwa, Norbert, Dr., 32805 Horn-Bad Meinberg (DE)
(74) Vertreter: Rehberg Hüppe + Partner

(56) Entgegenhaltungen:
- EP-A- 1 262 607
- EP-A- 1 657 375
- BE-A- 792 718
- DE-C1- 10 034 407
- DE-U- 1 951 655
- DE-U1- 8 904 124
- DE-U1- 29 904 919

## Beschreibung

### TECHNISCHES GEBIET DER ERFINDUNG

Die Erfindung bezieht sich auf eine Verbundplatte für den Innenausbau mit einer sich über die gesamte Fläche der Verbundplatte erstreckenden Dämmschicht und einer beim Innenausbau dem Innenraum zuzuwendenden und sich ebenfalls über die gesamte Fläche der Verbundplatte erstreckenden weiteren Schicht. Weiterhin bezieht sich die Erfindung auf ein Halbfertigprodukt zur Ausbildung einer solchen Verbundplatte.

Die Erfindung bezieht sich nicht auf Dämmplatten mit weitgehend homogener Zusammensetzung über ihre gesamte Dicke, die allenfalls im Bereich ihrer Sichtseiten etwas verdichtet sind. D. h., die Deckschicht einer Verbundplatte, auf die sich die vorliegende Verbindung bezieht, besteht regelmäßig aus einem anderen Material als die Dämmschicht und ist zur Ausbildung der Verbundplatte mit der Deckschicht verbunden worden.

### STAND DER TECHNIK

Alle Dämmplatten, die eine zu der Dämmschicht zusätzliche Deckschicht aufweisen, wobei sich sowohl die Dämmschicht als auch die Deckschicht über die gesamte Fläche der Dämmplatte erstreckt, sind Verbundplatten der eingangs beschriebenen Art. Solche Dämmplatten sind zwar bekannt und werden üblicherweise nach ihrem Verbau zum Innenraum hin weiter behandelt, indem sie beispielsweise gespachtelt und anschließend tapeziert oder direkt gestrichen werden. Beim Einsatz von Dämmplatten mit ausreichender Formsteifigkeit wird zwar relativ schnell eine relativ ebene an den Innenraum angrenzende Oberfläche erstellt, diese bedarf aber noch der beschriebenen Weiterbehandlung. Zudem weisen bekannte ausreichend formsteife Dämmplatten, die nicht mehr zusätzlich mit formsteifen Deckplatten verkleidet werden müssen, nur eine begrenzte wärmedämmende Wirkung auf.

Aus der DE 100 42 918 A1 ist ein Verbundelement aus Holz und einer Wärmedämmung bekannt, bei dem zwischen zwei im Wesentlichen parallel angeordneten Holzlatten ausschließlich Dämmstoff angeordnet und mit den Holzlatten verbunden ist, so dass ein im Wesentlichen steifes Verbundelement gebildet wird. Dieses Verbundelement ist als Stütze oder Stiel zwischen zwei Deckplatten vorgesehen, wobei mehrere Stützen bzw. Stiele mit Abstand parallel zueinander zwischen den Deckplatten verlaufen. Die zwischen den Verbundelementen verbleibenden Freiräume sind mit Dämmmaterial ausgefüllt, das im Gegensatz zu dem Dämmstoff der Verbundelemente keine tragende Funktion hat, d. h. die Deckplatten nicht aneinander abstützt.

Aus der DE 1 960 468 U1 ist eine Wand- oder Deckenverkleidungsplatte bekannt, die eine Hauptträgerplatte im Wesentlichen aus Schaumkunststoff, insbesondere Polystyrol, aufweist, auf welche auf nur einer Seite der Verkleidungsplatte eine Dekorschicht aus einem Furnier, einer Folie oder dgl. aufgebracht ist. Dabei sind die Seitenkanten derartig abgefräst, dass das Trägermaterial als vertiefter Streifen sichtbar ist. Überdies ist die bekannte Verkleidungsplatte mit einem Nut- und Federprofil im Bereich der Hauptträgerplatte versehen. Eine Dämmschicht aus Schaumkunststoff, insbesondere Polystyrol, steht einer diffusionsoffenen Bauweise grundsätzlich entgegen.

Aus der DE 299 04 919 U1 ist eine Schichtplatte bekannt, die auf Holzwerkstoff basiert. Dabei ist eine Mittelschicht aus einer OSB-Platte vorgesehen, auf die beidseitig Holzwerkstoffplatten aufgeklebt sind, die eine merklich feiner strukturierte Oberfläche als die OSB-Platte besitzen. Auf die Holzwerkstoffplatten wiederum kann auf einer Seite der Verbundplatte eine Dekorschicht und auf der anderen Seite eine thermoaktivierbare Klebeschicht aufgebracht sein. Eine OSB-Platte weist keine für eine Dämmschicht ausreichende Wärmedämmende Wirkung auf.

Aus der DE 82 05 445 U1 ist eine mit einer Isolierschicht versehene Verkleidungsplatte bekannt. Die Isolierschicht besteht aus Polystyrol, wobei auf der Ober- und Unterseite der Isolierschicht Hartfaserplatten materialschlüssig angeordnet sind. Auf nur einer Seite der Verkleidungsplatte ist mit der Hartfaserplatte eine aus Holz bestehende Platte materialschlüssig verbunden, die als Furnierschicht ausgebildet sein kann. Diese bekannte Verkleidungsplatte kann an den Kanten angefast sein, wobei auch die Stirnkanten der Holzplatte und der Hartfaserplatte angerundet bzw. angefast ausgebildet sein können. Weiterhin kann in der Isolierschicht eine Nut- und Federanordnung ausgebildet sein.

Die DE 100 34 407 C1 offenbart ein Paneel, insbesondere ein Fußboden-Laminat-Paneel mit einem Kern aus Holzwerkstoff und einer an seiner Unterseite des Paneels befestigten Dämmschicht. Der Kern aus Holzwerkstoff kann insbesondere aus MDF oder HDF bestehen und eine Dekorschicht auf seiner Oberseite aufweisen. Die Dämmschicht ist in Längs- und Querrichtung kürzer ausgebildet als das Paneel und mittels Streifenverleimung an dem Kern aus Holzwerkstoff befestigt, wobei die Leimstreifen in Querrichtung verlaufen und so dick sind, dass sich zwischen der Dämmschicht und dem Paneel Zwischenräume ausbilden.

Aus der BE-A-792918 sind ein Halbfertigprodukt und eine Verbundplatte mit den Merkmalen des Oberbegriffs des unabhängigen Patentanspruchs 1 bzw. des Patentanspruchs 6 bekannt. Hier ist die Verklebung zwischen der Trägerschicht und der Dämmschicht ebenfalls in Streifenverleimung mit Abständen zwischen den einzelnen Leimspuren ausgeführt, wobei die Trägerschicht und die Dämmschicht zwischen den Leimspuren auch einen Abstand in der Richtung normal zu ihren Oberflächen aufweisen. Konkret beträgt die von den Leimspuren bedeckte Oberfläche zwischen 45 und 65 % der beiden miteinander verklebten Oberflächen. Die Trägerschicht ist eine harte Holzfaserplatte mit einer Dicke zwischen 1 und 10 mm, und die Dämmschicht ist eine poröse Faserplatte mit einer Dicke zwischen 5 und 30 mm. Die Dichte der porösen Faserplatte beträgt 250 kg/m³. Die Dämmschicht verformt sich dabei trotz ihrer geringen Dichte und ihrer Fähigkeit, Wasser zu absorbieren, nur wenig.

### AUFGABE DER ERFINDUNG

Der Erfindung liegt die Aufgabe zugrunde, eine Verbundplatte und ein Halbfertigprodukt zur Ausbildung einer solchen Verbundplatte aufzuzeigen, deren Verwendung den Innenausbau beschleunigt, wobei gleichzeitig eine sehr gute Wärmedämmung erreicht und eine diffusionsoffene Bauweise ermöglicht wird.

### LÖSUNG

Die Aufgabe der Erfindung wird durch ein Halbfertigprodukt mit den Merkmalen des Patentanspruchs 1 und eine Verbundplatte mit den Merkmalen des Patentanspruchs 6 gelöst. Bevorzugte Ausführungsformen des neuen Halbfertigprodukts und der neuen Verbundplatte sind in den Unteransprüchen 2 bis 5 bzw. 7 bis 13 beschrieben.

### BESCHREIBUNG DER ERFINDUNG

Bei der neuen Verbundplatte ist die beim Innenausbau dem Innenraum zuzuwendende Deckschicht eine Dekorschicht, also eine solche Schicht, die ohne Weiterbearbeitung der verbauten neuen Verbundplatte eine ansehnliche dem Innenraum zugewandte Oberfläche bereitstellt. Mit anderen Worten ist der Innenausbau mit dem Einbau der neuen Verbundplatte abgeschlossen. Um die Deckschicht in ihrer ebenen Form zu stabilisieren und um beispielsweise auch das Einschlagen von Nägeln oder das Befestigen von Wandanhängungen mit Schrauben zu ermöglichen, ist die Dekorschicht der neuen Verbundplatte auf einer formsteifen Trägerschicht angeordnet und dauerhaft mit dieser verbunden. Die Trägerschicht ihrerseits ist dauerhaft mit der in Bezug auf den Innenraum hinter ihr liegenden Dämmschicht verbunden. Die neue Verbundplatte weist also einen dreilagigen Aufbau auf, wobei jeder Lage des Aufbaus eine spezielle Funktion zugeordnet ist. Die Dekorschicht bildet die ohne weitere Bearbeitung fertige, dem ausgebauten Innenraum zugewandte Sichtfläche aus; die formsteife Trägerschicht stabilisiert die Deckschicht und auch die Dämmschicht, so dass die neue Verbundplatte insgesamt eben bleibt; und die Dämmschicht sorgt für die erwünschte Wärmedämmung und kann, da die tragende Funktion bereits von der Trägerschicht erfüllt ist, ganz an die Dämmfunktion angepasst sein, also beispielsweise eine sehr geringe Rohdichte aufweisen.

Die Deckschicht der neuen Verbundplatte kann eine Farbschicht, insbesondere eine Lackschicht sein, aber auch eine Klarlackschicht, die den Blick auf eine ansehnliche Trägerschicht freigibt. D. h., es handelt sich jeweils um eine Schicht, die bereits für die Integrität ihrer zweidimensionalen und nicht nur ihrer ebenen Ausrichtung auf die Trägerschicht angewiesen ist. Die Deckschicht kann aber auch ein mit einem Harz, wie beispielsweise einem Melaminharz, getränktes und mit diesem Harz auch auf die Trägerschicht aufgeklebtes Dekorpapier sein. Eine andere Möglichkeit stellt die Ausbildung der Deckschicht durch eine Kunststofffolie dar. Dabei kann die Kunststofffolie mit einem separaten Klebemittel auf die Trägerschicht aufgeklebt sein oder zu diesem Zweck selbstklebend ausgebildet sein.

Die Deckschicht kann ihrerseits mit einem abziehbaren Schutzüberzug versehen sein, der nach dem Verbauen der neuen Verbundplatte abgezogen wird und bis dahin die Deckschicht vor Beschädigungen und Verunreinigungen schützt. Bei einer weniger empfindlichen Deckschicht kann aber auf solch einen Schutzüberzug ohne weiteres verzichtet werden.

Die Trägerschicht ist eine formsteife Faserplatte, insbesondere eine Hartfaser-, HDF- oder Dünn-MDF-Platte sein. Bei einer formsteifen Faserplatte ist der Aufbau der Trägerschicht auch dann besonders homogen ist, wenn sie eine nur vergleichsweise geringe Dicke aufweist. Eine Formsteife Faserplatte weist typischerweise eine mittlere Rohdichte von mehr als 700 kg/m³ auf, bevorzugt liegt die mittlere Rohdichte der Trägerschicht bei 850 kg/m³ und mehr. Konkret sind weiterhin Trägerschichten bevorzugt, die gemeinsam mit der Deckschicht in eine Dicke von 3,0 bis 6,0 mm resultieren. Die Trägerschicht sollte auch deshalb möglichst dünn gehalten werden, weil sie typischerweise eine recht hohe Rohdichte aufweist, was bei einer vergleichsweise dickeren Trägerschicht in ein deutlich höheres Gewicht der Verbundplatte pro Flächeneinheit und bei einer gleich bleibenden Gesamtdicke der Verbundplatte, bei der eine dickere Trägerschicht zu Lasten der Dämmschicht geht, zusätzlich in eine schlechtere Wärmedämmung resultiert.

Auch die Dämmschicht ist eine Faserplatte auf der Basis von Lignocellulose-haltigen Fasern. Sie weist aber eine deutlich geringere mittlere Rohdichte als die Trägerschicht von weniger als 250 kg/m³ auf, wobei die Dämmschicht eine leichte MDF-Platte ist. Bei einer solch niedrigen Rohdichte ergibt sich nicht nur eine gute Wärmedämmung, sondern auch eine gewisse Nachgiebigkeit der Dämmschicht, die auf der einen Seite durch die Trägerschicht kompensiert wird und die auf der anderen Seite zum Ausgleich von Unebenheiten einer Unterkonstruktion genutzt werden kann. Die Dicke der Dämmschicht kann je nach gewünschten Wärmedämmung relativ frei gewählt werden. Die Dicke beträgt, 40 bis 80 mm, wobei zu berücksichtigen ist, dass eine sehr dicke Dämmschicht auch bei deutlich geringerer Rohdichte als diejenige der Trägerschicht doch erheblich zu dem Gesamtgewicht pro Flächeneinheit der neuen Verbundplatte beiträgt.

Während es zum Aufkleben der Deckschicht auf die Trägerschicht, beispielsweise wenn die Deckschicht aus einem harzgetränkten Dekorpapier besteht oder auf einem solchen aufbaut, durchaus möglich ist, eine Heißpresse einzusetzen, wird die Trägerschicht der neuen Verbundplatte regelmäßig mit einem kalt klebenden Klebemittel auf die Dämmschicht aufgeklebt. Zur exakt parallelen Ausrichtung der Trägerschicht und der Dämmschicht und zur Sicherstellung einer guten Verbindung der beiden Schichten durch das Klebemittel ist es aber auch hier sinnvoll, die beiden Schichten aneinander zu pressen. Das Klebemittel, mit dem die Trägerschicht und die Dämmschicht kalt verklebt werden, kann ein Schaum-bildendes Klebemittel sein. Dies ist aber nicht entscheidend für die Ausbildung der neuen Verbundplatte. Es ist ausreichend hier ein Klebemittel einzusetzen, das für eine dauerhafte Verbindung der Trägerschicht mit der Dämmschicht sorgt.

Wie bei verschiedenen Bauplatten durchaus üblich, kann auch die neue Verbundplatte, um sie mit anderen Verbundplatten zu verbinden, an mindestens einer ihrer Schmalseiten mit einer Nut versehen sein. Bei der neuen Verbundplatte ist diese Nut vorzugsweise innerhalb der Dämmschicht ausgebildet. Beim Bau der neuen Verbundplatte kann in die Nut ein Zwischenelement eingreifen, das auf seiner Rückseite in die Nut einer zweiten Verbundplatte eingreift.

Bevorzugt ist es jedoch, wenn aus der Dämmschicht an ihrer der Nut gegenüberliegenden Schmalseite eine in die Nut fassende Feder ausgebildet ist, so dass beim Verbau der neuen Verbundplatte jeweils die Feder einer weiteren Verbundplatte in die Nut der neuen Verbundplatte eingeführt wird.

Zur Befestigung der neuen Verbundplatte an einer Unterkonstruktion, wie beispielsweise einem Lattengerüst, können sich in der Nut abstützende Befestigungsklammern vorgesehen sein, die grundsätzlich dieselbe Grundform aufweisen wie, aber andere Abmessungen haben als die Befestigungsklammern, die zum Befestigen von mit Nuten und Federn versehenen Paneelbrettern an einer Unterkonstruktion verwendet werden.

Zusätzlich kann ein in der Nut der neuen Verbundplatte zu verankerndes Kunststoffprofil vorgesehen sein, das nach dem Verbau Stoßkanten zwischen den Deckschichten von aneinander anstoßenden einzelnen neuen Verbundplatten abdeckt. Durch dieses Kunststoffprofil können auch Versprünge und Nichtparallelitäten zwischen den im Bereich der Stoßkanten aneinander angrenzenden Verbundplatten kaschiert werden.

Alternativ kann die Trägerschicht der neuen Verbundplatte im Übergang zu den Schmalseiten der Verbundplatte angefast sein, wobei sich die Deckschicht über diese Fasen erstreckt. Hierdurch wird eine zwar optisch hervorgehobene, aber auch soweit verbreiterte Fuge zwischen den aneinander anstoßenden Verbundplatten geschaffen, die das Auge ebenfalls über Nichtparallelitäten und Versprünge der Verbundplatten im Bereich ihrer Stoßkanten hinwegtäuscht.

Die Dämmschicht der neuen Verbundplatte kann auf ihrer der Deckschicht abgekehrten Seite freiliegen. Sie kann aber auch mit einem flexiblen Witterungsschutzüberzug versehen sein. Dieser Witterungsschutzüberzug kann beispielsweise eine dampfdurchlässige Folie sein, die auch beim Verbau der neuen Verbundplatte auf dieser verbleibt. Zu denken ist aber auch an eine vollkommen dichte Folie, die ebenfalls beim Verbau der neuen Verbundplatte auf dieser verbleibt oder bei Wunsch einer diffusionsoffenen Bauweise auch zuvor von dieser entfernt werden kann. In diesem Fall besteht der Witterungsschutz nur bis zum Verbau der neuen Verbundplatte.

Die Dimensionierung der neuen Verbundplatte sollte sich in Bezug auf die Länge ihrer Schmalkanten daran orientieren, was beim Innenaufbau praktikabel ist. Günstig ist es, wenn jede einzelne neue Verbundplatte noch von einem Hand- oder Heimwerker getragen und beim Verbau ohne größere Schwierigkeiten ausgerichtet werden kann. Dies beschränkt die sinnvolle Maximalabmessung nach oben. Konkret kann das Format der neuen Verbundplatte 0,625 x 1,87 m oder auch 0,5 x 0,5 m betragen. Allgemein wird die Breite der neuen Verbundplatte in einem Bereich von 40 bis 70 cm liegen, während ihre Höhe zwischen 1,2 und 2,8 m liegt.

Das erfindungsgemäße Halbfertigprodukt weist als weitere Schicht eine nur auf einer Seite der Verbundplatte vorhandene Trägerschicht aus einer formsteifen Faserplatte auf, die für das Aufbringen einer Dekorschicht vorgesehen ist. Auch hier ist die Trägerschicht dauerhaft mit der Dämmschicht verklebt, die eine Faserplatte auf der Basis lignocellulose-haltiger Fasern mit einer mittleren Rohdichte kleiner als 250 kg/m³ ist. Um die Faserplatte für das Aufbringen einer Dekorschicht vorzusehen, muss diese grundierbar, lackierbar, streichbar, tapezierbar oder beklebbar sein und hierfür ggf. vorbehandelt sein. Bei der Verwendung dieses Halbfertigprodukts kann die Dekorschicht später, also auch noch nach dem eigentlichen Verbauen der Verbundplatte z. B. durch Streichen der Trägerschicht mit einer Wandfarbe aufgebracht werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Querschnitt durch einen Ausschnitt der neuen Verbundplatte.
- **Fig.2**: zeigt einen Querschnitt durch zwei aneinander angrenzende Verbundplatten, wobei eine Feder der einen Verbundplatte in eine Nut in der anderen Verbundplatte eingreift und wobei zusätzlich eine Befestigungsklammer mit einer Befestigungsschraube dargestellt ist, die zum Befestigen der Verbundplatte an einer Unterkonstruktion dient; und
- **Fig. 3**: zeigt wiederum zwei aneinander angrenzende Verbundplatten mit einer Nut- und -Feder-Verbindung, wobei die Stoßkante der beiden Verbundplatten anders als in Fig. 2 ausgebildet und ein Kunststoffprofi zur Abdeckung dieser Stoßkante vorgesehen ist.

### FIGURENBESCHREIBUNG

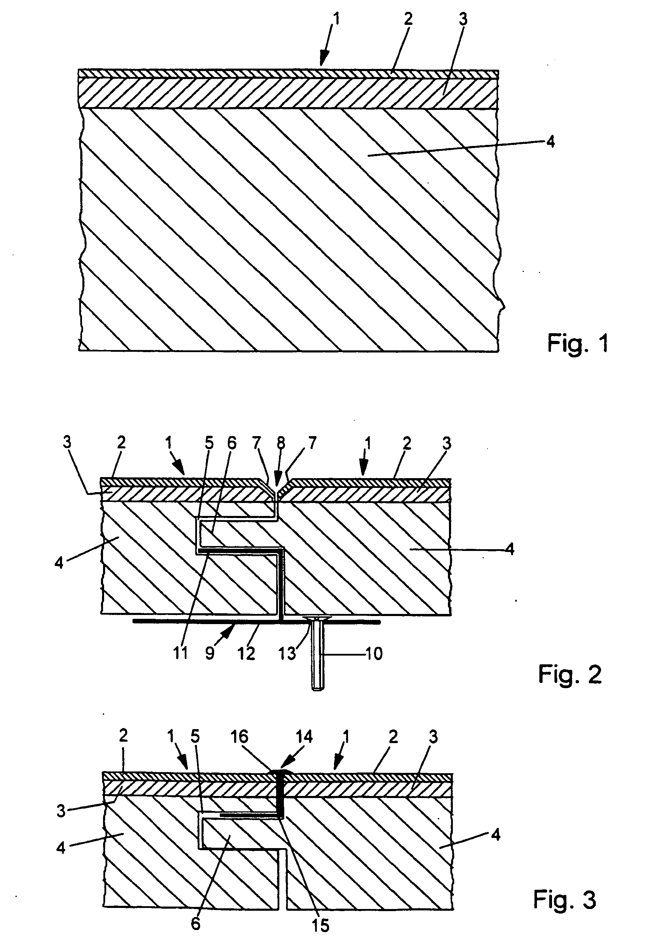

Die in **Fig. 1** in Form eines Ausschnitts wiedergegebene Verbundplatte 1 weist eine Deckschicht 2, eine Trägerschicht 3 und eine Dämmschicht 4 auf. Die Deckschicht 2 ist eine Dekorschicht, die nach dem Verbau der Verbundplatte 1 beim Innenausbau dem Innenraum zugekehrt ist und dazu vorgesehen ist, ohne weitere Bearbeitung zu verbleiben. Im Konkreten handelt es sich bei der Deckschicht um eine Lackierung der unter ihr liegenden Trägerschicht 3. Die Trägerschicht 3 ist eine HDF-Platte, die formsteif ist und insbesondere die ebene Ausrichtung der Deckschicht sicherstellt. Die Trägerschicht 3 ermöglicht es auch, an einer aus der Verbundplatte 1 ausgebildeten Wand Gegenstände anzuschrauben oder mit Hilfe von Nägeln aufzuhängen. Die Trägerschicht 3 ist flächig, d. h. mit einer sich über die gesamte Grenzfläche erstreckenden (hier nicht separat wiedergegeben) Klebstoffschicht auf die Dämmschicht 4 aufklebt und so dauerhaft mit dieser verbunden. Die Dämmschicht 4 besteht aus einer superleichten MDF-Platte, die ihrerseits nur begrenzt formstabil ist und beispielsweise bei lokaler Beanspruchung auf Druck nachgibt. Die Funktion der Dämmschicht 4 besteht darin, einen mit Hilfe der Verbundplatte 1 ausgebauten Innenraum gegenüber seiner Umgebung mit einer Wärmedämmung zu versehen. Die Leistungsfähigkeit dieser Wärmedämmung hängt im Wesentlichen von der Rohdichte der Dämmschicht 4 und ihrer Dicke ab. Die Deckschicht 2 kann zusätzlich mit einem hier nicht dargestellten, nach dem Verbau der Verbundplatte 1 zu entfernenden Schutzüberzug versehen sein. Die Dämmschicht 4 kann auf ihrer der Dämmschicht 4 abgekehrten Seite ebenfalls einen Schutzüberzug aufweisen. Dieser kann wahlweise vor dem Verbau der neuen Verbundplatte entfernt werden oder dauerhaft auf dieser verbleiben, insbesondere wenn es sich hierbei um eine diffusionsoffene Folie handelt.

**Fig. 2** zeigt den Übergangsbereich zwischen zwei Verbundplatten 1. Hier wird sichtbar, dass die Verbundplatten an einer Schmalseite mit einer Nut 5 versehen sind, die sich in die Dämmschicht 4 hinein erstreckt. An ihrer gegenüberliegenden Schmalseite sind die Verbundplatten 1 mit einer Feder 6 aus dem Material der Dämmschicht 4 versehen, die in ihren Abmessungen darauf abgestimmt ist, in die Nut 5 einzugreifen. Außer dieser Nut- und -Feder-Verbindung gehen aus Fig. 2 noch zwei weitere zusätzliche Details hervor. Die Trägerschichten 3 der Verbundplatten 1 sind im Übergang zu ihren Schmalseiten angefast, wobei sich die jeweilige Deckschicht 2 über die Fase 7 bis auf die Schmalseite der jeweiligen Verbundplatte 1 erstreckt. Hierdurch entsteht eine sichtbare Fuge 8 im Bereich der Stoßkante zwischen den Verbundplatten 1. Diese Fuge 8 betont zwar die Stoßkante, sie lässt aber kleinere Fehlausrichtungen der Verbundplatten 1 zueinander, was ihre Parallelität in der Fläche und die Parallelität ihrer Schmalseiten anbelangt, verschwinden. D. h., diese Fehlausrichtungen treten optisch weniger deutlich hervor, als wenn für die Fasen 7 nicht vorhanden wären. Weiterhin ist in Fig. 2 eine Befestigungsklammer 9 wiedergegeben, um die Verbundplatten 1 an einer hier nicht dargestellten Unterkonstruktion mit Hilfe einer oder mehrerer Schrauben 10 zu befestigen. Die Befestigungsklammer 9 greift mit einem Arm 11 in die Nut 5 ein. Der Arm 11 steht von einer Grundplatte 12 der Befestigungsklammer 9 hakenförmig ab. In der Grundplatte 12 ist eine Durchbrechung 13 vorgesehen, durch die hindurch die Schraube 10 in die hier nicht dargestellte Unterkonstruktion eingreift. Die Befestigungsklammer 9 wird in die Nut 5 eingeschoben und zur Befestigung der hier links dargestellten Verbundplatte 1 eingesetzt, bevor die rechts dargestellte Verbundplatte 1 mit ihrer Feder 6 in die Nut 5 eingeschoben wird, wodurch die Befestigungsklammer verdeckt wird. Die hier rechts dargestellte Verbundplatte 1 wird dann an ihrer gegenüberliegenden Schmalseite mit ihrer entsprechenden Befestigungsklammer 9 an der Unterkonstruktion befestigt.

**Fig. 3** zeigt den Übergangsbereich zwischen zwei Verbundplatten 1, die zwar auch hier einerseits mit einer Nut 5 und andererseits mit einer Feder 6 versehen sind, wobei aber auf die Fasen 7 verzichtet ist. Stattdessen ist in der Nut 5 ein Kunststoffprofil 14 verankert. Das Kunststoffprofil 14 greift mit einem Arm 15 in die Nut 5 ein und deckt mit seinem Sichtbereich 16 die Stoßkante zwischen den Verbundplatten 1 ab. Der Sichtbereich 16 überdeckt dabei etwaige Nichtparallelitäten der beiden Verbundplatten in der Fläche und auch in Bezug auf den Verlauf ihrer Schmalseiten. Die Befestigungsklammer 12 gemäß Fig. 2 ist hier nur weggelassen, um die Zeichnung zu vereinfachen, sie könnte aber zusätzlich zum Befestigen der Verbundplatten 1 an einer hier nicht dargestellten Unterkonstruktion eingesetzt werden.

### BEZUGSZEICHENLISTE

- 1: Verbundplatte
- 2: Deckschicht
- 3: Trägerschicht
- 4: Dämmschicht
- 5: Nut
- 6: Feder
- 7: Phase
- 8: Fuge
- 9: Befestigungsklammer
- 10: Schraube
- 11: Arm
- 12: Grundplatte
- 13: Durchbrechung
- 14: Kunststoffprofil
- 15: Arm
- 16: Sichtbereich

## Patentansprüche

1. Plattenförmiges Halbfertigprodukt zur Ausbildung einer Verbundplatte für den Innenausbau, wobei das Halbfertigprodukt eine sich über die gesamte Fläche der Verbundplatte erstreckenden Dämmschicht und eine beim Innenausbau dem Innenraum zuzuwendende und sich ebenfalls über die gesamte Fläche der Verbundplatte erstreckenden weiteren Schicht aufweist, wobei die weitere Schicht eine nur auf einer Seite der Verbundplatte (1) vorhandene Trägerschicht (3) aus einer formsteifen Faserplatte ist, die für das Aufbringen einer Dekorschicht vorgesehen ist, und wobei die Trägerschicht (3) dauerhaft mit der Dämmschicht (4) verklebt ist, die eine Faserplatte auf der Basis Lignocellulose-haltiger Fasern ist, **dadurch gekennzeichnet, dass** die Trägerschicht (3) flächig mit einer sich über die gesamte Grenzfläche erstreckenden Klebstoffschicht mit der Dämmschicht (4) verklebt ist und dass die Dämmschicht (4) eine MDF-Platte mit einer Dicke von 40 bis 80 mm und mit einer mittleren Rohdichte kleiner als 250 kg/m³ ist.

2. Halbfertigprodukt nach Anspruch 1, **dadurch gekennzeichnet, dass** die Trägerschicht (3) eine Hartfaser-, HDF- oder Dünn-MDF-Platte aufweist.

3. Halbfertigprodukt nach einem der Ansprüche 1 und 2, **dadurch gekennzeichnet, dass** die Trägerschicht (3) mit einem kalt klebenden Klebemittel auf die Dämmschicht (4) aufgeklebt ist.

4. Halbfertigprodukt nach einem der Ansprüche 1 bis 3, **dadurch gekennzeichnet, dass** die Dämmschicht (4) an mindestens einer ihrer Schmalseiten mit einer Nut (5) versehen ist und dass aus der Dämmschicht (4) an ihrer der Nut (5) gegenüber liegenden Schmalseite eine in die Nut passende Feder (6) ausgebildet ist.

5. Halbfertigprodukt nach einem der Ansprüche 1 bis 4, **dadurch gekennzeichnet, dass** die Dämmschicht (4) auf ihrer der Trägerschich (3) abgekehrten Seite frei liegt oder mit einem flexiblen Witterungsschutzüberzug versehen ist.

6. Verbundplatte für den Innenausbau mit einer sich über die gesamte Fläche der Verbundplatte erstreckenden Dämmschicht und einer beim Innenausbau dem Innenraum zuzuwendenden und sich ebenfalls über die gesamte Fläche der Verbundplatte erstreckenden weiteren Schicht, wobei die weitere Schicht eine als Dekorschicht ausgebildete Deckschicht (2) ist ; wobei die Deckschicht (2) auf einer nur auf einer Seite der Verbundplatte (1) vorhandenen Trägerschicht (3) aus einer formsteifen Faserplatte angeordnet und dauerhaft mit dieser verbunden ist und wobei die Trägerschicht (3) dauerhaft mit der Dämmschicht (4) verklebt ist, die eine Faserplatte auf der Basis Lignocellulose-haltiger Fasern ist **dadurch gekennzeichnet, dass** die Trägerschicht (3) flächig mit einer sich über die gesamte Grenzfläche erstreckenden Klebstoffschicht mit der Dämmschicht (4) verklebt ist und dass die Dämmschicht (4) eine MDF-Platte mit einer Dicke von 40 bis 80 mm und mit einer mittleren Rohdichte kleiner als 250 kg/m³ ist.

7. Verbundplatte nach Anspruch 6, **dadurch gekennzeichnet, dass** die Deckschicht (2) eine Lackschicht, ein harzgetränktes Dekorpapier oder eine Kunststofffolie aufweist.

8. Verbundplatte nach Anspruch 6 oder 7, **dadurch gekennzeichnet, dass** die Deckschicht (2) mit einem abziehbaren Schutzüberzug versehen ist.

9. Verbundplatte nach einem der Ansprüche 6 bis 8, **dadurch gekennzeichnet, dass** die Trägerschicht (3) eine Hartfaser-, HDF- oder Dünn-MDF-Platte aufweist und dass die Trägerschicht (3) zusammen mit der Deckschicht (2) eine Dicke von 3,0 bis 6,0 mm aufweist.

10. Verbundplatte nach einem der Ansprüche 6 bis 9, **dadurch gekennzeichnet, dass** die Trägerschicht (3) mit einem kalt klebenden Klebemittel auf die Dämmschicht (4) aufgeklebt ist.

11. Verbundplatte nach einem der Ansprüche 6 bis 10. **dadurch gekennzeichnet, dass** die Dämmschicht (4) an mindestens einer ihrer Schmalseiten mit einer Nut (5) versehen ist und dass aus der Dämmschicht (4) an ihrer der Nut (5) gegenüber liegenden Schmalseite eine in die Nut passende Feder (6) ausgebildet ist.

12. Verbundplatte nach Anspruch 11, **dadurch gekennzeichnet, dass** die Trägerschicht (3) im Übergang zu den Schmalseiten der Verbundplatte angefast ist, wobei sich die Deckschicht (2) über die Fase (7) erstreckt.

13. Verbundplatte nach einem der Ansprüche 6 bis 12, **dadurch gekennzeichnet, dass** die Dämmschicht (4) auf ihrer der Deckschicht (2) abgekehrten Seite frei liegt oder mit einem flexiblen Witterungsschutzüberzug versehen ist.

## Claims

1. Board-shaped semi-finished product for forming a composite board for interior work, wherein the semi-finished product comprises an insulation layer extending over the entire area of the composite board and a further layer to be turned towards the interior in interior work and also extending over the entire area of the composite board, wherein the further layer is a supporting layer (3) made of a rigid fibre board, which is only present at one side of the composite board (1) and which is intended for applying a decoration layer, and wherein the supporting layer (3) is permanently glued to the insulation layer (4), which is a fibre board on the basis of lignocellulose-containing fibres, **characterized in that** the supporting layer (3) is two-dimensionally glued to the insulation layer (4) with a glue layer extending over the entire boundary surface, and that the insulation layer (4) is a MDF board having a thickness of 40 to 80 mm and an average gross density of less than 250 kg/m³.

2. Semi-finished product of claim 1, **characterized in that** the supporting layer (3) comprises a hard fibre, HDF or thin MDF board.

3. Semi-finished product of any of the claims 1 and 2, **characterized in that** the supporting layer (3) is glued to the insulating layer (4) by means of a cold gluing glue.

4. Semi-finished product of any of the claims 1 to 3, **characterized in that** the insulation layer (4) is provided with a groove (5) at at least one of its narrow sides, and that a tongue (6) fitting into the groove is formed out of the insulation layer (4) at its narrow side opposite to the groove (5).

5. Semi-finished product of any of the claims 1 to 4, **characterized in that** the insulation layer (4), at its side opposite to the supporting layer (3), lays open or is provided with a flexible weather protection cover.

6. Composite board for interior work comprising an insulation layer extending over the entire area of the composite board and a further layer to be turned towards the interior in interior work and also extending over the entire area of the composite board, wherein the further layer is a cover layer (2) made as a decoration layer; wherein the cover layer (2) is arranged on top of a supporting layer (3) made of a rigid fibre board only arranged on one side of the composite board (1) and permanently glued to the insulating layer (4) which is a fibre board on the basis of lignocellulose-containing fibres, **characterized in that** the supporting layer (3) is two-dimensionally glued to the insulating layer (4) with a glue layer extending over the entire boundary surface, and that the insulation layer (4) is a MDF board having a thickness of 40 to 80 mm and an average gross density of less than 250 kg/m³.

7. Composite board of claim 6, **characterized in that** the cover layer (2) comprises a lacquer layer, a resin-impregnated decoration paper or a plastic film.

8. Composite board of claim 6 or 7, **characterized in that** the cover layer (2) is provided with a removable protection cover.

9. Composite board of any of the claims 6 to 8, **characterized in that** the supporting layer (3) comprises a hard fibre, HDF or thin MDF board, and that the supporting layer (3) together with the cover layer (2) has a thickness of 3.0 to 6.0 mm.

10. Composite board of any of the claims 6 to 9, **characterized in that** the supporting layer (3) is glued to the insulation layer (4) by means of a cold gluing glue.

11. Composite board of any of the claims 6 to 10, **characterized in that** the insulation layer (4) is provided with a groove (5) at at least one of its narrow sides and that a tongue (6) fitting into the groove is formed out of the insulation layer (4) at its narrow side opposite to the groove (5).

12. Composite board of claim 11, **characterized in that** the supporting layer (3) is chamfered in the transition area towards the narrow sides of the composite board, wherein the cover layer (2) extends over the chamfer.

13. Composite board of any of the claims 6 to 12, **characterized in that** the insulation layer (4), at its side opposite to the cover layer (2), lays open or is provided with a flexible weather protection cover.

## Revendications

1. Produit semi-fini en forme de panneau pour la réalisation d'un panneau composite pour l'aménagement intérieur, le produit semi-fini comportant une couche isolante, qui s'étend sur toute la surface du panneau composite, et une couche supplémentaire à orienter vers l'espace intérieur pendant les travaux d'aménagement intérieur et qui s'étend également sur toute la surface du panneau composite, la couche supplémentaire étant une couche support (3), qui est prévue seulement sur une face du panneau composite (1) et qui est réalisée dans un panneau en fibres à forme rigide, qui est prévu pour l'application d'une couche de décor, et la couche support (3) étant collée durablement à la couche isolante (4), qui est un panneau en fibres à base de fibres contenant de la lignocellulose, **caractérisé en ce que** la couche support (3) est collée à plat à la couche isolante (4) au moyen d'une couche de colle qui s'étend sur toute la surface de séparation, et **en ce que** la couche isolante (4) est un panneau en fibres à densité moyenne (MDF) avec une épaisseur de 40 à 80 mm et avec une masse volumique apparente inférieure à 250 kg/m³.

2. Produit semi-fini selon la revendication 1, **caractérisé en ce que** la couche support (3) comporte un panneau en fibres dures, un panneau en fibres à haute densité (HDF) ou un panneau MDF mince.

3. Produit semi-fini selon l'une des revendications 1 et 2, **caractérisé en ce que** la couche support (3) est collée sur la couche isolante (4) au moyen d'une colle adhérant à froid.

4. Produit semi-fini selon l'une quelconque des revendications 1 à 3, **caractérisé en ce que** la couche isolante (4) est munie d'une rainure (5) sur au moins un de ses petits côtés, et **en ce qu'**une languette (6) ajustée à la rainure est ménagée dans la couche isolante (4) sur son petit côté opposé à la rainure (5).

5. Produit semi-fini selon l'une quelconque des revendications 1 à 4, **caractérisé en ce que** la couche isolante (4) est libre sur sa face opposée à la couche support (3) ou est munie d'un revêtement flexible de protection contre les intempéries.

6. Panneau composite pour l'aménagement intérieur, comportant une couche isolante, qui s'étend sur toute la surface du panneau composite, et une couche supplémentaire à orienter vers l'espace intérieur pendant les travaux d'aménagement intérieur et qui s'étend également sur toute la surface du panneau composite, la couche supplémentaire étant une couche de protection (2) réalisée sous la forme d'une couche de décor, la couche de protection (2) étant disposée sur une couche support (3), qui est prévue seulement sur une face du panneau composite (1) et qui est réalisée dans un panneau en fibres à forme rigide et est assemblée durablement à celui-ci, et la couche support (3) étant collée durablement à la couche isolante (4), qui est un panneau en fibres à base de fibres contenant de la lignocellulose, **caractérisé en ce que** la couche support (3) est collée à plat à la couche isolante (4) au moyen d'une couche de colle qui s'étend sur toute la surface de séparation, et **en ce que** la couche isolante (4) est un panneau en fibres à densité moyenne (MDF) avec une épaisseur de 40 à 80 mm et avec une masse volumique apparente inférieure à 250 kg/m³.

7. Panneau composite selon la revendication 6, **caractérisé en ce que** la couche de protection (2) comporte une couche de peinture, un papier décor imprégné de résine ou une feuille en matière plastique.

8. Panneau composite selon la revendication 6 ou 7, **caractérisé en ce que** la couche de protection (2) est munie d'un revêtement de protection détachable.

9. Panneau composite selon l'une quelconque des revendications 6 à 8, **caractérisé en ce que** la couche support (3) comporte un panneau en fibres dures, un panneau en fibres à haute densité (HDF) ou un panneau MDF mince, et **en ce que** la couche support (3), conjointement avec la couche de protection (2), a une épaisseur de 3,0 à 6,0 mm.

10. Panneau composite selon l'une quelconque des revendications 6 à 9, **caractérisé en ce que** la couche support (3) est collée sur la couche isolante (4) au moyen d'une colle adhérant à froid.

11. Panneau composite selon l'une quelconque des revendications 6 à 10, **caractérisé en ce que** la couche isolante (4) est munie d'une rainure (5) sur au moins un de ses petits côtés, et **en ce qu'**une languette (6) ajustée à la rainure est ménagée dans la couche isolante (4) sur son petit côté opposé à la rainure (5).

12. Panneau composite selon la revendication 11, **caractérisé en ce que** la couche support (3) est chanfreinée dans la zone de transition vers les petits côtés du panneau composite, la couche de protection (2) s'étendant sur le chanfrein (7).

13. Panneau composite selon l'une quelconque des revendications 6 à 12, **caractérisé en ce que** la couche isolante (4) est libre sur sa face opposée à la couche de protection (2) ou est munie d'un revêtement flexible de protection contre les intempéries.
